# EUROPEAN PATENT SPECIFICATION

(11) **EP 0 560 746 B1**
(45) Date of publication and mention of the grant of the patent: **27.12.1996**
(21) Application number: 93850042.8
(22) Date of filing: 10.03.1993
(51) Int. Cl.: B65G 1/04

(54) **A stacker crane transferable between warehouse aisles**
Ein zwischen mehreren Regalgängen bewegbares Regalbedienungsgerät
Un transstockeur transférable entre les rayons d'un magasin de stockage

(30) Priority: 10.03.1992 SE 9200734
(43) Date of publication of application: 15.09.1993
(73) Proprietor: ACCALON AB, S-433 38 Partille (SE)
(72) Inventor: Johansson, Lennart, S-595 00 Mjölby (SE)
(74) Representative: Willquist, Bo

(56) References cited:
- CH-A- 517 654
- DE-B- 1 295 479
- US-A- 4 046 267

## Description

The present invention relates to a materials handling system comprising a railbound storage crane for transporting goods in storage corridors, a transfer carriage for moving the crane transversely between two storage corridors, transfer carriage drive means, and a carrier frame mounted on the transfer carriage and functioning to support and stabilize the crane during its movement between the storage corridors.

Systems of this kind are used when a storage crane is to handle goods in two or more neighbouring storage corridors. The crane is normally supported on two wheels which roll along a rail mounted on the floor of the storage corridor. The crane is unstable on the floor-mounted rail and must therefore be stabilized with the aid of a guide mounted on the mast top and running along a ceiling-mounted rail. The transfer carriage is intended to move the crane transversely between the storage corridors and as the crane is moved must be capable of supporting and stabilizing the crane when the crane has left the floor-mounted rail and the ceiling-mounted rail. In many instances, such systems are a convenient alternative to the more general construction which includes one storage crane for each storage corridor and particularly in the case of handling materials at average or low frequencies, i.e. when each load unit shall be stored over a period which is somewhat longer than the period normally required to economically justify one crane for each storage corridor. The storage crane and the transfer carriage are most often controlled automatically with the aid of different types of control computers.

The majority of known transfer devices are oriented towards large client-adapted storage systems, and associated transfer carriages are therefore especially constructed for each individual system and also heavily dimensioned so as to be able to support and hold the crane stably in a vertical position. The carriages have their own drive and control systems and are railbound in a track which is let into the floor surface of the storage corridors. These devices require very high investments in machinery and material and are therefore only of interest in the case of average-sized storage systems and small storage systems by way of an exception. Simpler solutions are found with regard to the transfer of picker truck.

For instance, U.S. 4,046,267 teaches an arrangement for moving a picker truck between the storage corridors with the aid of a transfer carriage which runs on the same floor level as the truck and is driven by the truck driving motor. This system, however, is also relatively intricate and cannot be used for transporting railbound storage cranes, but is totally oriented towards trucks which are driven directly on the floor.

The main reason for not being able to use the arrangement disclosed by this patent is that the stability would not be sufficient when utilizing this arrangement in a material handling system of the present invention.

One object of the present invention is therefore to provide a materials handling system which includes a storage crane and a transfer carriage so constructed as to enable the system to be viable technically and economically within much smaller storage localities than was possible with the earlier known systems. Another object is to simplify the transfer carriage drive and control arrangement. A third object is to provide constructive cooperation between storage crane and transfer carriage such as to enable different floor levels between storage corridors and transfer areas to be avoided and also separate vertical crane control devices mounted on the carriage or along the path travelled thereby.

Further objects of the invention and advantages afforded thereby will be evident from the following description. The aforesaid objects of the invention are achieved with a materials handling system having the characteristic features set forth in the following Claims.

One condition for achieving the aim of a more generally usable transfer arrangement is that standard storage locations can be equipped with said arrangement without needing to restructure existing floors, walls and ceilings.

Another important condition is that the structure of the transfer carriage and the drive arrangement are much simpler than earlier constructions. The inventive solution enables the crane control and drive means to be used to manoeuver the transfer carriage, which can therefore be manufactured as a simple, passive supporting carriage which lacks its own drive motor and drive wheels. Because the crane-carried transfer drive wheel can be moved down into abutment with the transfer carriage support surface and therewith drive the carriage, the need to provide complicated power transmitting coupling devices between the crane drive means and the transfer carriage is obviated.

According to one embodiment of the invention, there is mounted on the crane a wheel moving device which functions to hold the transfer drive wheel in a raised position during normal work carried out by the crane in the storage corridors and to lower the wheel into abutment with the transfer carriage support surface when advancing the transfer carriage. This enables the crane to be moved along the rail without being impeded or disturbed by a downwardly hanging additional wheel.

According to another inventive feature, the transfer carriage has two supportive beams which are arranged on a respective side of the crane rail on the carriage in a manner to directly support and stabilize the crane. The crane is supported via wheeled support arms which project laterally from the crane chassis. This enables the major part of the weight of the crane to be lowered onto the support beams and to relieve the crane rail from load to a corresponding degree. This will enable the rail to be supported on a thin support pad close to the supporting surface, or foundation surface, so that the rail on the carriage and in the crane corridors can be mounted at essentially the same level.

The crane drive motor is conveniently arranged to drive the transfer drive wheel with the aid of coupling devices by means of which the driving wheel of the drive motor and the drive wheel of the transfer carriage can be coupled mechanically, and a particular advantage is afforded when this mechanical coupling is effected with the aid of the aforesaid movement device. For instance, this will enable a setting means to be provided for vertical manoeuvering of the transfer drive wheel and for connecting driving power thereto.

The invention will now be described in more detail with reference to the accompanying drawings, in which
- Figure 1: is a side view of a storage crane included in the inventive system;
- Figure 2: is a side view of the same crane in a parking position on a transfer carriage in accordance with the invention;
- Figure 3: is a view from above of the storage crane and transfer carriage in the position shown in Figure 2;
- Figure 4: is a cross-sectional view taken on the line 4-4 in Figures 2 and 3;
- Figure 5: is a perspective view of the rear part of an inventive storage crane seen in an intermediate position while moving between storage corridor and transfer carriage;
- Figure 6: is a side view of a coupling unit included in the drive arrangement for advancing the transfer carriage; and
- Figure 7: illustrates the coupling unit shown in Figure 6 from above.

The illustrated storage crane includes typically a wheeled chassis 11, a vertical chassis-mounted lifting mast 12 and a load carrier 13 which can move along the mast. The chassis 11 is carried by a front and a rear wheel 14, 15, of which the rear wheel 15 functions as a drive wheel and is connected to a drive motor 17 via a gearbox 16. The wheels are intended to run on a rail 18 which is mounted on the floor 19 of a storage corridor. The crane is held stably in a vertical position with the aid of a top guide 20 mounted on the mast top 21. The top guide includes two or more runners 22 mounted on a respective side of a top guide beam 23 mounted on the ceiling of the storage corridor. The purpose of the crane is to transport load units to and from storage places on the racks located on either side of a storage corridor.

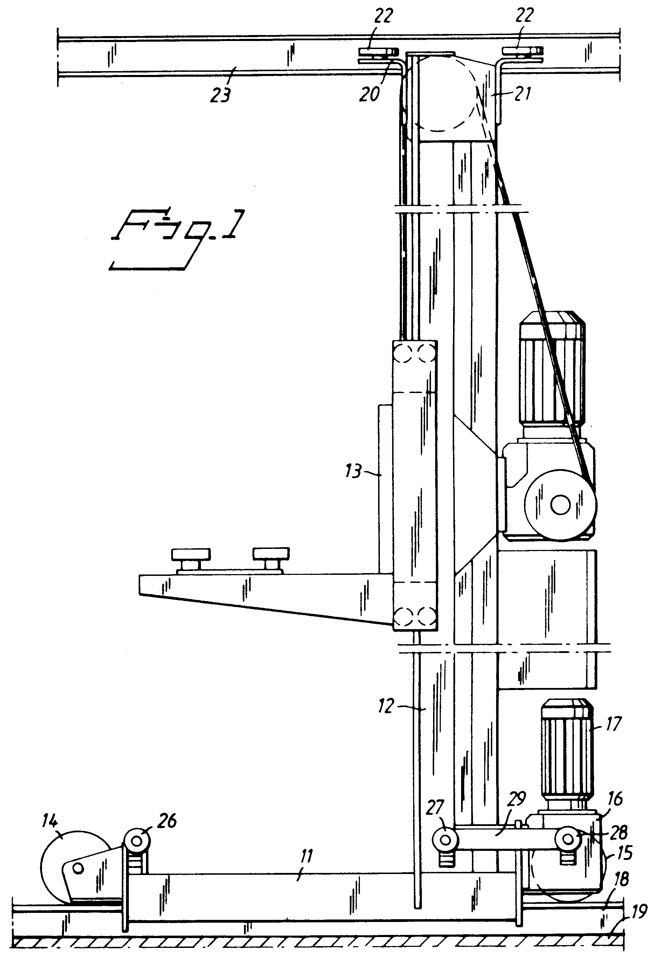

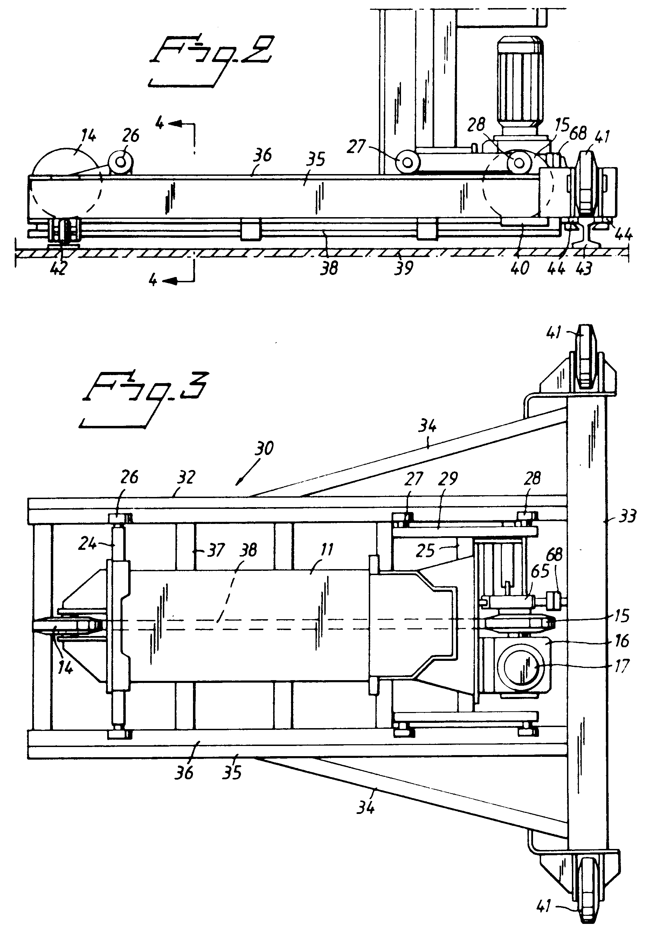

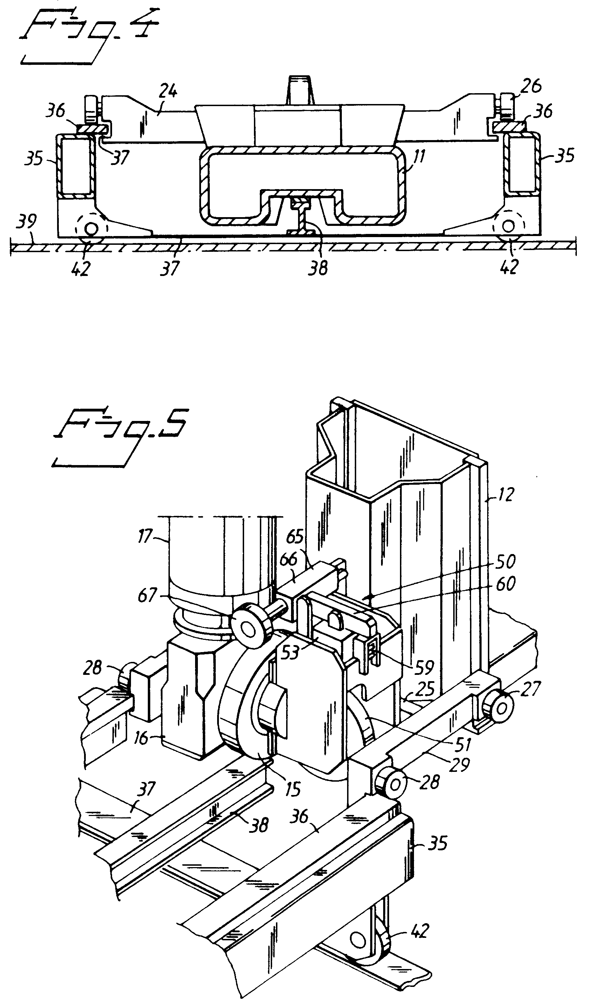

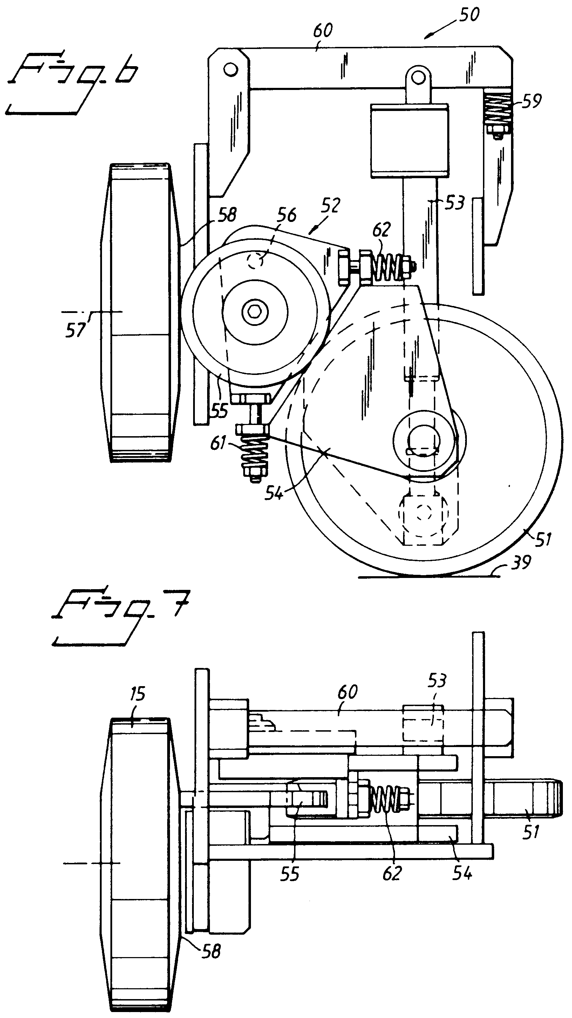

The crane chassis 11 has a front support arm and a rear support arm 24, 25 fitted thereto. The support arms extend perpendicularly to the longitudinal axis of the crane and are provided with support wheels 26, 27, 28 at their respective outer ends, of which wheels the rear support wheels 27, 28 are mounted on a transverse arm 29 on the rear support arm 25. The purpose of these support arms 24, 25 is to stabilize and support the crane during its movement between two storage corridors, as evident from Figures 2-5. The crane is moved between corridors with the aid of a transfer carriage 30 which moves transversely between the parallel corridors, in a conventional manner. The transfer carriage is comprised mainly of a horizontal framework which includes a carrier frame 32 which is mounted perpendicularly to a main beam 33 which extends in the direction of the longitudinal axis of the carriage and is stabilized thereagainst with the aid of two inclined support beams 34. The carrier frame 32 is intended to receive and support the storage crane and includes two longitudinally extending support beams 35. Welded firmly to the upper surface of the support beams 35 are support and guide bars 36 which function as a support surface or foundation surface for the support wheels 26, 27, 28 and as guide bars for recesses 37 in the support arms. Mounted between the parallel support beams 35 are a number of flat bars 37' which function to support a rail 38 for crane wheels 14, 15. The flat bars 37 are mounted on the undersurfaces of respective support beams 35, so that the rail 38 will be located as close as possible to the foundation surface 39 of the carriage. When the crane is in its parking position on the transfer carriage, as shown in Figures 2 and 3, the support wheels 26, 27, 28 rest on the support beams 35 and the front crane wheel 14 rests on the rail 38, while the drive wheel 15 is located over a free space 40 for reasons that will be evident from the following. The transfer carriage is supported on two large support wheels 41 and two smaller support wheels 42, these wheels being firmly mounted on the main beam 33 and the carrier frame 32 respectively. The carriage is guided by a longitudinally extending guide bar or rail 43 through the agency of side support wheels 44 which are mounted in the proximity of the larger wheels 41. The large wheels thus run on the guide rail whereas the smaller wheels 42 run freely on the foundation surfaces or pads 39 in the absence of side guides. The smaller wheels are mounted beneath the support beams 35 so as to be located essentially immediately beneath the guide rails 36 and therewith beneath the crane support wheels 26, 27, 28. This will prevent the carrier frame 32 being subjected to other force moments than those originating from the load on the crane rail 38. By suitable dimensioning, it is possible to transfer 60-90% of the total weight of the crane to the support beams, whereby the residual load on the crane rail 38 will be very small and the flat bar 37 can be given a low structural height. This enables the flat bar 37 to be given a thickness which is so small that the rail 38 will be located at the same height above the floor as the rail 18 in the storage corridors.

The transfer carriage does not have individual carriage driving and controlling devices and such devices are incorporated in the crane. A coupling unit 50 is therefore mounted on the crane chassis for the purpose of transmitting power from the crane drive motor 17 to a transfer drive wheel 51 mounted on the coupling unit. The power transmission takes place fully automatically from the drive wheel 15 via coupling means 52 comprising a bearing housing 54, which can be pivoted by means of a setting device 53, and an intermediate wheel 55. The bearing housing 54 can be swung about an axle 56 which extends perpendicularly to the axle 57 of the drive wheel 15. The setting device 53 and the bearing housing 54 together form means for moving the transfer drive wheel and function to move said transfer drive wheel vertically between a raised first position, indicated in Figure 5, and a lowered second position, shown in Figure 6. When in its lowered position, the transfer drive wheel 51 lies against the carriage support pad 39 while the outer periphery of the intermediate wheel 55 lies against the outer periphery of the transfer drive wheel 51 and also against one side 58 of the chassis drive wheel 15. The chassis drive wheel will therewith rotate the intermediate wheel which, in turn, rotates the transfer drive wheel and therewith causes the transfer carriage 21 to move along its drive path. Mounted on a lever arm 60 between the setting device 53 and the chassis is a spring device 59 by means of which a suitable pressure is exerted on the carriage support pad 39.

The pressure at which the intermediate wheel 55 abuts the transfer drive wheel and the chassis drive wheel respectively can be adjusted by means of further spring devices 61, 62 mounted on the bearing housing. When moving the bearing housing from its lowered position to its raised position, the setting device 53 contracts and the bearing housing is swung around the axle 56 so as to move the transfer drive wheel 51 vertically upwards while moving the intermediate wheel out of abutment with the chassis drive wheel 15. By suitable selection of the diameters of the coupling wheels 51, 55 and the point of abutment on the side of the chassis drive wheel, it is possible to obtain a transmission in which the normal speed control of the drive motor is also sufficient for moving the transfer carriage.

As will be understood, the transfer drive wheel 51 is in its raised position during normal driving of the storage crane in the storage corridors and when handling loads therein. When the crane is to be transferred from one corridor to another, the crane is driven to a position adjacent the corridor entrance and movement of the crane to the transfer carriage is commenced in the manner evident from Figure 5. Thus, the crane is moved forwards onto the crane rail 38 by means of its own drive wheel, said crane rail 38 being mounted on the same level as the rail 18 in the movement path of the crane. At the same time, the support wheels 28 are moved onto the rails 36 which, in turn, will extend into the recesses 37. Similar to the tracks or rails 18, 38, the support arms 24, 25 and the support beams 35 are so adapted to one another vertically and laterally that these components are able to fit with one another without changing the level of the crane. As the crane continues to move, the support wheels 27 move onto the rails 36 in a similar fashion, whereafter the crane top guide 20 may optionally leave the top guide beam 23, in which case all lateral forces are now transmitted down onto the transfer carriage. Normally, however, the top guide beam is permitted to project slightly beyond the crane transfer point and is thereby able to guide the crane laterally until its support wheels 26 and the front crane wheel 14 have been moved onto the carriage. When the drive wheel 15 reaches the free space 40, the wheel will lose contact with the rail 38 and the weight of the crane at this end is transferred totally to the support wheels 27, 28. In order to ensure that the crane is held in a definite and safe parking position on the transfer carriage, a pusher means 65 is mounted on the crane and functions to hold the crane in a given, determined position with the aid of a setting device 66 and an electric coupling magnet 67 when the drive wheel 15 and the transfer drive wheel are located in the free space 40. The magnet head 67 is intended to be moved forwards onto an armature plate 68 mounted on the main beam 33. When the crane is located in its parking position, the transfer drive wheel 51 can be lowered to its lowered position, as earlier described. By using the normal drive motor control equipment intended for driving the crane backwards and forwards, the transfer carriage can be moved in any desired direction along its transfer path in the same manner. In order to reduce the effect of undesirable lateral forces on the transfer rail 43, the transfer carriage will preferably be constructed so that the common point of gravity of the carriage and the crane will fall in the vicinity of the surface with which the transfer drive wheel is in abutment with the support pad 39. It should be emphasized that even though a large part of the weight of the crane is supported by the support wheels 26, 27, 28, sufficient wheel pressure remains on the crane wheels 14, 15 to guarantee transfer of the carriage and the drive-on and drive-off of the crane without risk of slipping or other drawbacks. When the crane has been moved to a new storage corridor, the moving devices 53, 54 are caused to lift the transfer drive wheel 51 to its raised position and the pusher means 65 is able to move the crane slightly forwards so that the drive wheel 15 will again rest on the rail 38. The crane can then be driven readily to the next storage corridor and continue its work. During this working period of the crane, the transfer carriage remains locked in readiness for the next crane transfer operation.

It will be understood that the invention is not restricted to the described and illustrated embodiment thereof and that several modifications can be made within the scope of the following Claims. For instance, a separate motor may be provided for driving the transfer drive wheel and a number of electrical and mechanical coupling devices may be provided for power transmission between drive motor and transfer drive wheel.

## Claims

1. A materials handling system comprising a railbound storage crane for transporting goods in storage corridors, a transfer carriage (30) for moving the crane transversely between two storage corridors, transfer carriage drive means, and a carrier frame (32) mounted on the transfer carriage and functioning to support and stabilize the crane during its movement between the storage corridors, **characterized** in that the carrier frame (32) includes a crane rail (38) supported by two support beams (35) each mounted on a respective side of the crane rail (38) and extending parallel therewith and which is arranged generally parallel with and on the same level as the tracks (18) in the storage corridors, the transfer carriage forward drive means (17, 50) is mounted on the storage crane and includes a motor-driven wheel (51) which is intended for forward drive of the transfer carriage by abutment with a carriage support pad (39) and that a drive wheel (51) moving means (53, 54) is mounted on the storage crane and functions to move the drive wheel (51) vertically between a raised first position and a lowered second position, wherein the drive wheel occupies said first position when the crane is driven in the storage corridors and to and from the transfer carriage, and occupies said second position when driving the transfer carriage.

2. A system according to Claim 1, **characterized** in that the crane includes a chassis (11) having wheeled support arms (24, 25) which project laterally from the chassis, wherein the wheels (26, 27, 28) on the support arms are intended to rest on the support beams (35) and transfer a part of the weight of the crane to said support beams when the crane is positioned on the transfer carriage.

3. A system according to Claim 2, **characterized** in that the transfer carriage is intended to be supported by two large and two smaller support wheels (41, 42), of which the smaller support wheels are mounted beneath the support beams (35) in essentially the same vertical plane as the wheels (26, 27, 28) on the support arms (24, 25) but at right angles thereto; and in that the larger wheels are intended to run on a quide rail (43) which also functions to guide carriage movement via side support wheels (44).

4. A system according to any one of the preceding Claims, in which the storage crane includes a drive motor (17) and a drive wheel (15) for driving the crane in the storage corridors, **characterized** in that the drive motor (17) is also intended to drive the transfer drive wheel through the agency of a coupling unit (50).

5. A system according to Claim 4, **characterized** in that the coupling unit (50) includes transfer drive wheel moving means (53, 54) and coupling means (52) for coupling the drive wheel (15) mechanically to the transfer drive wheel (51).

6. A system according to Claim 5, **characterized** in that the coupling means (52) includes an intermediate wheel (55) which is intended to lie against the outer periphery of the transfer drive wheel (51) and against one side (58) of the drive wheel when the wheel moving means (53, 54) has brought the transfer drive wheel to its second, lowered position.

7. A system according to Claim 6, **characterized** in that the wheel moving means includes a pivotal bearing housing (54) on which the intermediate wheel (55) and the transfer drive wheel (51) are mounted; in that a setting device (53) is mounted between the bearing housing and the crane chassis; and in that the setting device is intended to swing the bearing housing and therewith the intermediate wheel towards or away from the drive wheel (15).

8. A system according to any one of Claims 6-7, **characterized** in that the coupling unit (50) includes spring means (59, 61, 62) for spring movement between the chassis and the transfer drive wheel and also between the intermediate wheel (55) and the transfer drive wheel and drive wheel (15) respectively.

9. A system according to any one of claims 4-8, **characterized** in that the crane rail (38) and the support beams (35) on the transfer carriage (30) are so adapted to the crane drive wheel (15) that the drive wheel is released from its abutment with the crane rail (38) when the crane is in a crane transfer parking position on the transfer carriage; and in that a pusher means (65) is mounted on the crane for movement of said crane when the drive wheel occupies said released position.

## Patentansprüche

1. Materialhandhabungssystem, umfassend einen schienengebundenen Speicherkran zum Transportieren von Gütern in Speicherkorridoren, einen Transferwagen (30) zum Bewegen des Krans quer zu den Speicherkorridoren, einen Transferwagenantrieb sowie einen Tragrahmen (32), der am Transferwagen montiert ist und den Kran während dessen Bewegung zwischen den Speicherkorridoren trägt und stabilisiert, dadurch gekennzeichnet, daß der Tragrahmen (32) eine Kranenschiene (38) umfaßt, die von zwei Tragbalken (35) getragen ist, deren jeder an einer entsprechenden Seite der Kranenschiene (38) montiert ist, sich parallel hierzu erstreckt und im wesentlichen parallel zu und auf demselben Niveau angeordnet ist wie die Schienen (18) in den Speicherkorridoren, daß der Vorwärtsantrieb des Transferwagens am Speicherkran montiert ist und ein motorgetriebenes Rad (51) umfaßt, das zum Vorwärtsantrieb des Transferwagens durch Anschlag an einem Wagentragklotz (39) dient, daß ein das Antriebsrad (51) bewegendes Element (53, 54) am Speicherkran montiert ist und dazu dient, das Antriebsrad (51) vertikal zwischen einer angehobenen ersten Position und einer abgesenkten zweiten Position zu bewegen, und daß das Antriebsrad die erste Position dann einnimmt, wenn der Kran in den Speicherkorridoren zu einem Transferwagen und von diesem angetrieben wird, und eine zweite Position, wenn der Transferwagen angetrieben wird.

2. System nach Anspruch 1, dadurch gekennzeichnet, daß der Kran ein Chassis (11) umfaßt, das mit Rädern versehene Tragarme (24, 25) aufweist, die seitlich über das Chassis hinausragen, daß die Räder (26, 27, 28) an den Tragarmen dazu dienen, auf den Tragbalken (35) zu ruhen und einen Teil des Gewichtes des Kranes dann auf die Tragbalken zu übertragen, wenn sich der Kran auf dem Transferwagen befindet.

3. System nach Anspruch 2, dadurch gekennzeichnet, daß der Transferwagen derart gestaltet und angeordnet ist, daß er von zwei großen und zwei kleineren Tragrädern (41, 42) getragen wird, von denen die kleineren Tragräder unterhalb der Tragbalken (35) in im wesentlichen derselben Vertikalebene wie die Räder (26, 27, 28) an den Tragarmen (24, 25) montiert sind, jedoch unter rechten Winkeln hierzu, und daß die größeren Räder dazu vorgesehen sind, auf einer Führungsschiene (43) zu laufen, die gleichzeitig dazu dient, die Wagenbewegung mittels Seitentragrädern (44) zu führen.

4. System nach einem der vorausgegangenen Ansprüche, wobei der Speicherkran einen Antriebsmotor (17) und ein Antriebsrad (15) zum Antreiben des Kranes in den Speicherkorridoren umfaßt, dadurch gekennzeichnet, daß der Antriebsmotor (17) auch dazu dient, das Transferantriebsrad mittels einer Kupplungseinheit (50) anzutreiben.

5. System nach Anspruch 4, dadurch gekennzeichnet, daß die Kupplungseinheit (50) ein Bewegungsmittel (53, 54) für das Transferantriebsrad umfaßt sowie eine Kupplung (52) zum mechanischen Ankoppeln des Antriebsrades (15) an das Transferantriebsrad (51).

6. System nach Anspruch 5, dadurch gekennzeichnet, daß die Kupplung (52) ein Zwischenrad (55) aufweist, das dazu vorgesehen ist, am Außenumfang des Transferantriebsrades (51) sowie an einer Seite (58) des Antriebsrades dann anzulegen, wenn das Radbewegungsmittel (53, 54) das Transferantriebsrad in seine zweite, abgesenkte Position verbracht hat.

7. System nach Anspruch 6, dadurch gekennzeichnet, daß das Radbewegungsmittel ein Schwenklagergehäuse (54) umfaßt, an welchem das Zwischenrad (55) und das Transferantriebsrad (51) montiert sind, daß eine Einstellvorrichtung (53) zwischen dem Lagergehäuse und dem Kranchassis angeordnet ist, und daß die Einstellvorrichtung dazu dient, das Lagergehäuse und damit das Zwischenrad gegen das Antriebsrad (15) sowie von diesem hinweg zu verschwenken.

8. System nach einem der Ansprüche 6 bis 7, dadurch gekennzeichnet, daß die Kupplungseinheit (50) eine Federeinheit (59, 61, 62) für eine federnde Bewegung zwischen Chassis und Transferantriebsrad sowie zwischen dem Zwischenrad (55) und dem Transferantriebsrad bzw. dem Antriebsrad (15) aufweist.

9. System nach einem der Ansprüche 4 bis 8, dadurch gekennzeichnet, daß die Kranenschiene (38) und der Tragbalken (35) auf dem Transferwagen (30) derart in bezug auf das Kranantriebsrad (15) gestaltet sind, daß das Antriebsrad von seinem Anschlag an der Kranschiene (38) dann freigegeben wird, wenn sich der Kran in einer Krantransferparkposition auf dem Transferwagen befindet, und daß ein Schieber (65) am Kran montiert wird, um den Kran dann zu verschieben, wenn das Antriebsrad die genannte freigegebene Position einnimmt.

## Revendications

1. Système de manutention de marchandises comprenant une grue de stockage guidée sur rail pour transporter les marchandises dans des corridors de stockage, un chariot de transfert (30) pour déplacer la grue transversalement entre deux corridors de stockage, des moyens d'entraînement de chariot de transfert, et un cadre de chariot (32) monté sur un chariot de transfert et servant à supporter et à stabiliser la grue pendant son mouvement entre les corridors de stockage, caractérisé en ce que le cadre de chariot (32) comprend un rail de grue (38) supporte par deux poutres porteuses (35) montées chacune sur un côté respectif du rail de grue (38) et s'étendant parallèlement à celui-ci, ledit rail de grue étant sensiblement parallèle aux voies (18) dans les corridors de stockage et au même niveau que celles-ci, les moyens d'entraînement du chariot de transfert vers l'avant (17,50) sont montés sur la grue de stockage et comprennnent une roue entraînée par moteur (51) qui est prévue pour effectuer un entraînement du chariot de transfert vers l'avant par butée avec un patin de support de chariot (39), et en ce que des moyens (53,54) de déplacement de la roue d'entraînement (51) sont montés sur la grue de stockage et fonctionnent pour déplacer la roue d'entraînement (51) verticalement entre une première position relevée et une deuxième position abaissée, la roue d'entraînement occupant ladite première position lorsque la grue est entraînée dans les corridors de stockage et vers et à partir du chariot de transfert et occupant ladite deuxième position lors de l'entraînement du chariot de transfert.

2. Système suivant la revendication 1, caractérisé en ce que la grue comprend un châssis (11) ayant des bras de support à roues (24,25) qui font saillie latéralement par rapport au châssis, les roues (26,27,28) des bras de support étant prévues pour reposer sur les poutres porteuses (35) et transférer une partie du poids de la grue auxdites poutres porteuses lorsque la grue est positionnée sur le chariot de transfert.

3. Système suivant la revendication 2, caractérisé en ce que le chariot de transfert est prévu pour être supporté par deux grandes roues et deux plus petites roues porteuses (41,42), dont les plus petites roues porteuses sont montées au-dessus des poutres porteuses (35) sensiblement dans le même plan vertical que les roues (26,27,28) des bras de support (24,25) mais perpendiculairement à ces dernières, et en ce que les plus grandes roues sont prévues pour rouler sur un rail de guidage (43) qui sert également à guider le mouvement du chariot par l'intermédiaire de roues d'appui latérales (44).

4. Système suivant une quelconque des revendications précédentes,dans lequel la grue de stockage comprend un moteur d'entraînement (17) et une roue d'entraînement (15) pour entraîner la grue dans les corridors de stockage, caractérisé en ce que le moteur d'entraînement (17) est également prévu pour entraîner la roue d'entraînement de transfert par l'intermédiaire d'un dispositif de transmission (50).

5. Système suivant la revendication 4, caractérisé en ce que le dispositif de transmission (50) comprend des moyens de déplacement de la roue d'entraînement de transfert (53,54) et des moyens de liaison (52) pour relier la roue d'entraînement (15) mécaniquement à la roue d'entraînement de transfert (51).

6. Système suivant la revendication 5, caractérisé en ce que les moyens de liaison (52) comprennent une roue intermédiaire (55) qui est prévue pour s'appliquer contre la périphérie extérieure de la roue d'entraînement de transfert (51) et contre une face (58) de la roue d'entraînement lorsque les moyens de déplacement de roue (53,54) ont amené la roue d'entraînement de transfert à sa deuxième position abaissée.

7. Système suivant la revendication 6, caractérisé en ce que les moyens de déplacement de roue comprennent un corps de palier pivotant (54) sur lequel la roue intermédiaire (55) et la roue d'entraînement de transfert (51) sont montées ; en ce qu'un dispositif de réglage (53) est monté entre le corps de palier et le châssis de grue ; et en ce que le dispositif de réglage est prévu pour faire pivoter le corps de palier et avec lui la roue intermédiaire de manière à la rapprocher ou à l'éloigner de la roue d'entraînement (15).

8. Système suivant une quelconque des revendications 6 et 7, caractérisé en ce que le dispositif de transmission (50) comprend des ressorts (59,61,62) pour un mouvement élastique entre le châssis et la roue d'entraînement de transfert et également entre la roue intermédiaire (55) et la roue d'entraînement de transfert et la roue d'entraînement (15) respectivement.

9. Système suivant une quelconque des revendications 4 à 8, caractérisé en ce que le rail de grue (38) et les poutres porteuses (35) sur le chariot de transfert (30) sont adaptés à la roue d'entraînement de grue (15) de sorte que la roue d'entraînement est dégagée de sa butée avec le rail de grue (38) lorsque la grue est dans une position de garage de transfert de grue sur le chariot de tranfert ; et en ce qu'un poussoir (65) est monté sur la grue pour un mouvement de la dite grue lorsque la roue d'entraînement occupe la dite position dégagée.
